# EUROPÄISCHE PATENTSCHRIFT

(11) **EP 1 828 554 B1**
(45) Veröffentlichungstag und Bekanntmachung des Hinweises auf die Patenterteilung: **17.04.2013**
(21) Anmeldenummer: 05807447.7
(22) Anmeldetag: 12.11.2005
(51) Int. Cl.: F01L 1/344

(54) **NOCKENWELLENVERSTELLER F]R EINE BRENNKRAFTMASCHINE**
CAMSHAFT ADJUSTER FOR AN INTERNAL COMBUSTION ENGINE
DISPOSITIF DE REGLAGE D'ARBRE A CAMES D'UN MOTEUR A COMBUSTION INTERNE

(30) Priorität: 23.12.2004 DE 102004062036
(43) Veröffentlichungstag der Anmeldung: 05.09.2007
(73) Patentinhaber: Schaeffler Technologies AG & Co. KG, 91074 Herzogenaurach (DE)
(72) Erfinder: KLEIBER, Thomas, 66265 Wahlschied (DE); OTTERSBACH, Rainer, 91086 Aurachtal (DE)
(86) Internationale Anmeldenummer: PCT/EP2005/012154
(87) Internationale Veröffentlichungsnummer: WO 2006/074744

(56) Entgegenhaltungen:
- EP-A- 0 848 141
- DE-A- 10 211 607
- DE-A1- 10 335 051
- US-A1- 2002 139 330
- US-A1- 2005 034 693
- US-A1- 2005 155 567
- US-B1- 6 202 610

## Beschreibung

### Gebiet der Erfindung

Die Erfindung betrifft einen Nockenwellenversteller für eine Brennkraftmaschine gemäß dem Oberbegriff des Anspruchs 1.

### Hintergrund der Erfindung

Aus DE 102 11 607 A1 ist ein Nockenwellenversteller zum Verstellen und Fixieren der relativen Drehwinkellage einer Nockenwelle gegenüber der Kurbelwelle einer Brennkraftmaschine bekannt. Eine hydraulische Verstelleinrichtung besitzt hierbei einen Außenrotor, der einem Antriebsrad zugeordnet ist, sowie einen Innenrotor, der über ein Abtriebselement mit einer Nockenwelle verbunden ist. Zwischen dem Außenrotor und dem Innenrotor sind Druckräume gebildet, nach deren hydraulischer Beaufschlagung die Winkelbeziehung zwischen dem Antriebsrad und dem Abtriebselement veränderbar ist.

In der genannten Druckschrift wird vorgeschlagen, das Antriebsrad und wenigstens eines der weiteren Funktionsteile einstückig aus einem hochbelastbaren Kunststoff herzustellen. Gemäß einer ersten Ausführungsform sind das Antriebsrad und der Außenrotor sowie zwei weitere Bauelemente einstückig aus Kunststoff hergestellt. Für eine alternative Ausgestaltung ist der Außenrotor als separates Bauteil aus Kunststoff oder einem herkömmlichen Material wie Metall hergestellt und in eine einstückig mit dem Antriebsrad ausgebildete Abdeckung eingelegt.

Der Außenrotor, der die radial außen liegenden Begrenzungen sowie Begrenzungen in Umfangsrichtung der Druckräume bildet, ist mit einer topfartigen Abdeckung verschraubt, die mit einer hohlzylinderförmigen Umfangsfläche den Außenrotor umgibt und von der Umfangsfläche radial nach außen auskragende Laschen besitzt, die mit dem Zahnkranz über durch die Laschen hindurchtretende Schrauben verbunden sind.

Die EP 0 848 141 offenbart einen Nockenwellenversteller mit einem Antriebsrad, einem Seitendeckel und einem Außenrotor, wobei die vorgenannten Bauteile in dieser Reihenfolge axial aufeinanderfolgend angeordnet sind und durch mehrere Schrauben miteinander verbunden sind.

Die DE 102 11 607 offenbart einen Nockenwellenversteller, welcher einen aus Kunststoff ausgebildeten Außenrotor aufweist, mit dem das Antriebsrad und ein Seitendeckel einteilig ausgebildet sind.

Die DE 103 35 051 offenbart einen Nockenwellenversteller welcher einen aus Kunststoff ausgebildeten Außenrotor aufweist, mit dem das Antriebsrad und ein Seitendeckel einteilig ausgebildet sind.

Die US2002/0139330 offenbart ebenso einen Nockenwellenversteller, bei dem das Antriebsrad und ein Seitendeckel einteilig ausgebildet sind.

### Aufgabe der Erfindung

Der Erfindung liegt die Aufgabe zugrunde, einen Nockenwellenversteller zu schaffen, der hinsichtlich der radialen Baugröße und/oder der hydraulischen Druckbeaufschlagung verbessert ist.

### Zusammenfassung der Erfindung

Erfindungsgemäß wird die Aufgabe durch die Merkmale des unabhängigen Patentanspruchs 1 gelöst.

Der Erfindung liegt die Erkenntnis zugrunde, dass die radiale Baugröße des Nockenwellenverstellers abhängt von der Summe der folgenden Abmessungen:
a) der radialen Baugröße des Außenrotors bzw. dem Radius der radialen Begrenzung der Druckräume,
b) dem radial erforderlichen Bauraum für die Befestigungselemente sowie die Laschen des Außenrotors und ggf. zugeordneten Laschen oder Flanschen, die sich von dem Zahnkranz radial nach innen erstrecken sowie
c) der radialen Abmessung des Zahnkranzes und der zugeordneten Bauteile.

Erfindungsgemäß wird die vorgenannte Summe dadurch vermindert, dass die Befestigungselemente zumindest teilweise bei einem Abstand von einer Längsachse des Nockenwellenverstellers angeordnet sind, der kleiner ist als der Außenradius der Druckräume. Hierdurch ergibt sich keine kumulative Verknüpfung der Abmessungen gemäß b) und c). Vielmehr ergibt sich eine radiale Überschneidung der Abmessungen gegenüber b) und c), so dass die gesamte radiale Baugröße vermindert ist.

Unter Verwendung der erfindungsgemäßen Erkenntnis ergeben sich neue Gestaltungsmöglichkeiten:
Für einen vorgegebenen Außenradius des Antriebsrades kann erfindungsgemäß der Außenradius der Druckräume vergrößert werden. Bei unveränderter hydraulischer Auslegung kann damit auch ein Innenradius der Druckräume vergrößert werden, so dass sich radial innen liegend in dem Nockenwellenversteller freier Bauraum ergibt. Andererseits kann für einen gleichbleibenden Innenradius der Druckräume die Wirkfläche für eine hydraulische Beaufschlagung vergrößert werden, wodurch sich eine verbesserte Stellwirkung und/oder eine verringerte Auslegung weiterer hydraulischer Bauelemente ergeben kann.
- Bei einem gleich bleibenden Außendurchmesser der Druckräume kann der Außenradius des Antriebsrades verringert werden, wodurch die radiale Baugröße des Antriebsrades und des Nockenwellenverstellers vermindert werden kann.
- Mischformen der beiden vorgenannten Alternativen sind ebenfalls möglich, wodurch sich erweiterte konstruktive Auslegungs- und neue Bauraummöglichkeiten ergeben.

Im Sinne der Erfindung werden unter Befestigungselementen die Befestigungselemente selbst wie Schauben, Nietverbindungen oder sonstige form- oder stoffschlüssige Befestigungselemente verstanden sowie zugeordnete Bereiche der zu verbindenden Bauteile wie die Flansche, Laschen oder ähnliches. Entsprechend der erfindungsgemäßen Lehre sollen die vorgenannten Befestigungselemente zumindest teilweise in radialer Richtung auf Höhe der Druckräume angeordnet sein. Hierbei können die Befestigungselemente an beliebiger Stelle in Längsrichtung des Nockenwellenverstellers und beliebig über die Umfangsrichtung verteilt angeordnet sein.

Gemäß einer besonderen Ausgestaltung der Erfindung sind die Befestigungselemente in Umfangsrichtung zwischen den Druckräumen angeordnet sowie in Richtung der Längsachse des Nockenwellenverstellers zwischen axialen Begrenzungen der Druckräume angeordnet. Dieser Ausgestaltung liegt die Erkenntnis zugrunde, dass in dem Außenrotor zwischen den Druckräumen in Umfangsrichtung entsprechend dem Stand der Technik Materialanhäufungen vorgesehen sind, die einen ungenutzten Bauraum darstellen und ein zusätzliches Gewicht des Außenrotors bedingen, wodurch das Massenträgheitsmoment des Nockenwellenverstellers vergrößert wird. Erfindungsgemäß kann dieser Bauraum vorteilhaft genutzt werden, indem innerhalb desselben die Befestigungselemente angeordnet werden.

Hierzu ist es erfindungsgemäß vorteilhaft, wenn der Außenrotor zwischen den benachbarten Druckräumen radiale Einbuchtungen aufweist, wobei die radialen Einbuchtungen Materialeinsparungen für den Außenrotor bedeuten und gleichzeitig den Bauraum für die Befestigungselemente schaffen. In die radialen Einbuchtungen ragen radial nach innen orientierte Laschen hinein, die fest mit dem Zahnkranz des Antriebsrades verbunden werden können.

Erfindungsgemäß ist die Lagerfläche des Außenrotors aus einem metallischen Einlagekörper gebildet, der stoffschlüssig von einem Tragkörper aus Kunststoff aufgenommen ist. Durch diese stoffschlüssige Aufnahme können die unerwünschten Freiheitsgrade, Spiel und unnötige Montageschritte vermieden werden. Dennoch kann ein metallischer Einlagekörper eingesetzt werden, so dass eine metallische Lagerfläche gegeben ist, wodurch der erhöhte Abrieb und eine erhöhte Reibung an den gleitenden Flächen vermieden werden kann. Bei dem Tragkörper kann es sich entweder um das Antriebsrad selber handeln oder ein weiteres Bauelement wie ein Flansch, der über entsprechende Befestigungselemente, reib-, formschlüssig und/oder stoffschlüssig, ggf. unter Zwischenschaltung weiterer Bauelemente, mit dem Antriebsrad verbunden ist.

Gemäß einer Weiterbildung der Erfindung ist der Einlagekörper in Umfangsrichtung umlaufend ausgebildet und bildet zusätzlich zu der Lagerfläche eine Begrenzung der Druckräume. Demgemäß ist der Einlagekörper multifunktional ausgebildet mit der Funktion der Lagerung und der betriebsfesten Gestaltung der Druckräume. Hierbei kann der Einlagekörper die Druckräume radial nach außen begrenzen und/oder in Umfangsrichtung und unter Umständen auch Begrenzungen oder Anschläge für den Innenrotor bilden. Durch die umlaufende Ausbildung des Einlagekörpers in Umfangsrichtung ist eine steife, geschlossene Ringstruktur gebildet.

Bei einer bevorzugten Ausbildung des erfindungsgemäßen Nockenwellenverstellers ist das Antriebsrad aus einem Verbundwerkstoff hergestellt. Im Sinne der Erfindung wird unter einem Verbundwerkstoff ein solcher verstanden, welcher mehrere Teilwerkstoffe beinhaltet. Diese Teilwerkstoffe können beispielsweise als ein Trägermaterial mit in dem Trägermaterial angeordneten Verstärkungselementen ausgebildet sein. Es kann sich um einen Faserverbundwerkstoff oder einen aus unterschiedlichen Schichten unterschiedlichen Materials ausgebildeten Körper handeln. Beispielsweise können Thermoplaste oder Duroplaste Einsatz finden oder aus Thermoplasten und Duroplasten zusammen hergestellten Materialkombinationen. Hierdurch können entsprechend der Materialwahl und der Materialkombination die mechanischen Eigenschaften des Antriebsrades auf geeignete Weise beeinflusst werden.

Gemäß einer weiteren Ausbildung der Erfindung ist der Innenrotor aus Kunststoff ausgebildet. Der Innenrotor weist zumindest eine stoffschlüssig mit diesem verbundene Lagerfläche aus Metall auf. Demgemäß können für den Rotor die für eine Ausbildung aus Kunststoff bekannten Vorteile Verwendung finden. Zusätzlich besitzen sowohl der Innenrotor als auch der Außenrotor Lagerflächen aus Metall, was sich hinsichtlich der Gleiteigenschaften und der Betriebsfestigkeit als vorteilhaft erwiesen hat.

Für den Fall, dass die Befestigungselemente nicht mit dem verwendeten Material des Antriebsrades bzw. des Flansches zusammenwirken sollen, ist es vorteilhaft, wenn die Befestigungselemente mit Verstärkungseinsätzen des Antriebsrades und/oder des Flansches zusammenwirken. Bei derartigen Verstärkungseinsätzen kann es sich beispielsweise um Metalleinsätze wie Inserts handeln, die sich beispielsweise mit ihrer Mantelfläche gegenüber dem weiteren Material des Antriebsrades oder des Flansches abstützen bei Gewährleistung einer guten Krafteinleitung. Etwaige Aufnahmeausnehmungen der Verstärkungseinsätze können hierbei für die Verbindung mit den Befestigungselementen gezielt gestaltet werden. Beispielsweise können in diese Verstärkungseinsätze Gewinde eingebracht werden, mit denen die Befestigungselemente verschraubt werden. Hierdurch ist ein besonders kompakter Aufbau des Nockenwellenverstellers möglich.

Für einen weiter verbesserten Nockenwellenversteller sind Einlagekörper und Tragkörper über einen Spritzprozess stoffschlüssig miteinander verbunden. Demgemäß kann der Einlagekörper neben seinen Funktionen im Betrieb während der Herstellung als Formgebungsfläche für einen Spritzprozess verwendet werden, indem auf diesen Material aufgespritzt wird. Der Spritzprozess gewährleistet gleichzeitig eine besonders gute stoffschlüssige Anbindung zwischen dem Anlagekörper und dem Tragkörper.

Weiterhin kann der Zahnkranz mit den Laschen einstückig und mit einem Verbundwerkstoff ausgebildet sein, wobei ein verstärkendes Material des Verbundwerkstoffes im Bereich der Laschen angeordnet ist. Hierdurch können die mechanischen Eigenschaften der Laschen verbessert werden.

### Kurze Beschreibung der Zeichnungen

Weitere Merkmale der Erfindung ergeben sich aus der folgenden Beschreibung und den zugehörigen Zeichnungen, in denen Ausführungsbeispiele der Erfindung schematisch dargestellt sind. Es zeigen:
- Figur 1: einen Teil eines Nockenwellenverstellers mit einem Außenrotor und einem Tragkörper aus Kunststoff mit stoffschlüssig angebundenem Einlagekörper sowie in dem Außenrotor verdrehbar gelagerten Innenrotor in einem Querschnitt;
- Figur 2: ein Nockenwellenversteller im Halblängsschnitt, bei dem das Antriebsrad aus Kunststoff über ein Befestigungselement an einen Flansch angebunden ist;
- Figur 3: ein Antriebszahnrad aus Kunststoff mit radial nach innen weisenden Laschen für die Aufnahme von Befestigungselementen;
- Figur 4: einen Halblängsschnitt eines Antriebsrades mit einem Steg oder einer Lasche und in den Steg oder die Lasche eingesetzten Inserts;
- Figur 5: ein Antriebszahnrad mit radial nach innen weisenden Laschen und in diesen angeordneten Inserts im Teilquerschnitt;
- Figur 6: einen Nockenwellenversteller im Querschnitt, wobei Befestigungselemente radial nach innen gezogen sind, so dass deren Abstand von der Längsachse des Nockenwellenverstellers kleiner ist als der Außendurchmesser der Druckkammern und
- Figur 7: ein Antriebszahnrad aus Kunststoff, welches über ein Tragelement an ein Gehäuse des Nockenwellenverstellers angebunden ist.

### Ausführliche Beschreibung der Erfindung

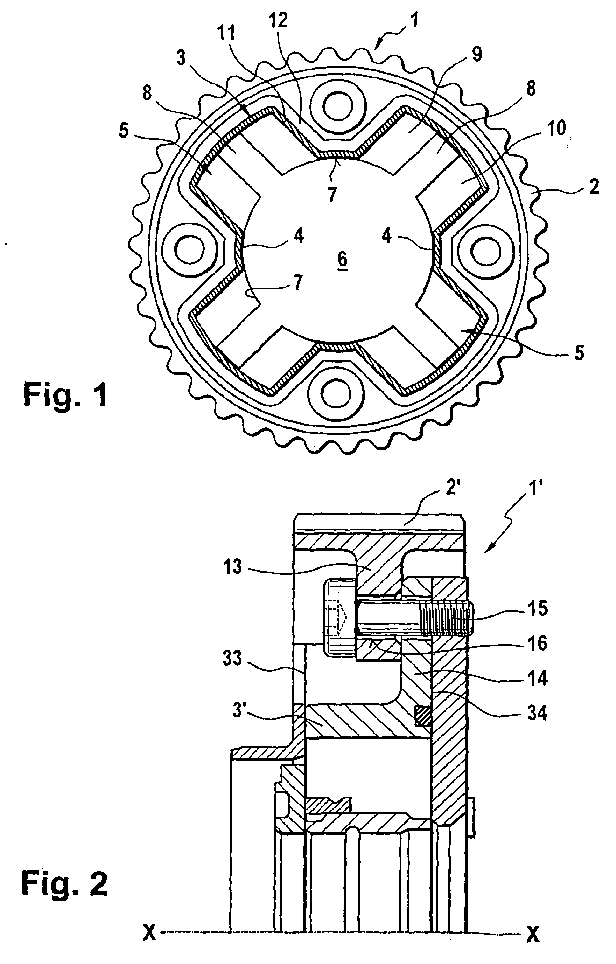

Die Erfindung betrifft einen hydraulischen Nockenwellenversteller 1 in an sich bekannter Bauart. Der Nockenwellenversteller besitzt ein Antriebsrad 2, welches in den dargestellten Ausführungsbeispielen als Riemenrad ausgebildet ist. Fest mit dem Antriebsrad 2 verbunden ist ein Außenrotor 3, der insbesondere radial innen liegend zum Antriebsrad 2 angeordnet ist. Der Außenrotor 3 ist mit Lagerflächen 4 ausgebildet, welche Segmenten einer Mantelfläche eines Zylinders entsprechen, sowie radiale Ausbuchtungen für Druckkammern 5. Gemäß dem in Figur 1 dargestellten Ausführungsbeispiel sind vier Lagerflächen 4 sowie vier Druckkammern 5 vorgesehen, die gleichmäßig über den Umfang verteilt sind. In dem Außenrotor 3 ist relativ verdrehbar gegenüber diesem um eine Längsachse des Nockenwellenverstellers 1 ein Innenrotor 6 angeordnet, der drehfest mit der Nockenwelle verbindbar oder verbunden ist. Der Innenrotor 6 besitzt korrespondierend zu den Lagerflächen 4 des Außenrotors 3 ausgebildete Lagerflächen 7 sowie flügelartige radiale Fortsätze 8, wobei gemäß dem in Figur 1 dargestellten Ausführungsbeispiel vier Lagerflächen 7 und vier Fortsätze 8 vorgesehen sind, die gleichmäßig über den Umfang des Innenrotors verteilt sind. Die Lagerflächen 4 und 7 bilden eine Abdichtung in Umfangsrichtung und die Stirnflächen der Fortsätze 8 liegen radial außenliegend unter Abdichtung an den zugeordneten Druckkammern 5 an, so dass in Umfangsrichtung beidseits der Fortsätze Druckräume 9, 10 gebildet sind. Durch geeignete Beaufschlagung der Druckräume 9, 10 kann die relative Winkellage zwischen Außenrotor 3 und Innenrotor 6 verändert werden, wodurch zur Verstellung der Öffnungszeiten von Ventilen die Winkelbeziehung zwischen dem Antriebsrad 2 und einer Nockenwelle verändert werden kann.

Gemäß Figur 1 sind sowohl die Druckkammern 5 als auch die Lagerflächen 4 mit einem in Umfangsrichtung umlaufenden metallischen Einlagekörper 11 gebildet, welcher ungefähr konstante Wandstärke aufweist. Der Einlagekörper 11 ist stoffschlüssig in einem Tragkörper 12 aufgenommen, der gemäß dem in Figur 1 dargestellten Ausführungsbeispiel integral mit dem Antriebsrad 2 ausgebildet ist oder als separates Bauteil ausgebildet ist, welches fest mit dem Antriebsrad 2 verbindbar ist.

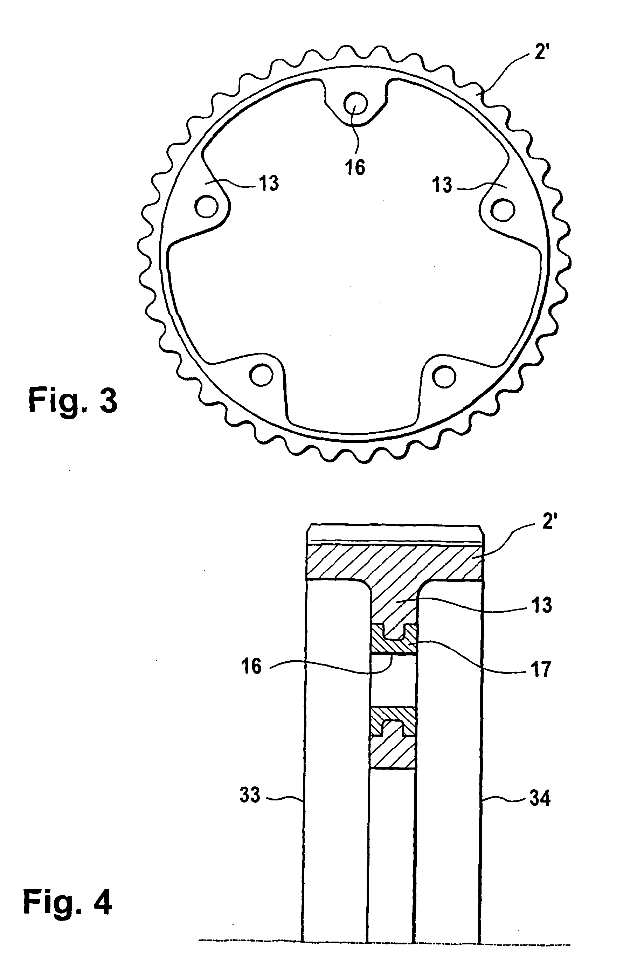

Figur 2 zeigt einen Nockenwellenversteller 1' im Längsschnitt. Bei diesem Nockenwellenversteller ist das Antriebsrad 2' integral mit nach innen ragenden, axial ungefähr mittig angeordneten Laschen 13 ausgebildet, die sich in Richtung einer Längsachse X-X des Nockenwellenverstellers 1' über ein Drittel bis ein Viertel der Breite der Laufverzahnung des Antriebsrades 2' erstrecken und gleichmäßig über den Umfang verteilt sind, vgl. Figur 3. An einer Stirnseite der Laschen 13 liegt ein Flansch 14 an, welcher integral mit dem Außenrotor 3' ausgebildet ist. Die Laschen 13 und der Flansch 14 sind reib-, form- oder stoffschlüssig miteinander verbunden und/oder über Befestigungselemente 15, welche gemäß Figur 2 als Schrauben ausgebildet sind. Hierzu besitzen die Laschen 13 sowie der Flansch 14 geeignete Bohrungen 16 mit oder ohne Gewinde. Die Bohrungen 16 mit oder ohne Gewinde können hierbei unmittelbar in das das Antriebsrad bildende Material eingebracht werden oder gemäß Figur 4 durch Verstärkungseinsätze 17 bereitgestellt werden, insbesondere Inserts, beispielsweise aus Metall, welche vorzugsweise stoffschlüssig an die weiteren integralen Elemente des Antriebsrades 2 angebunden sind.

Hinsichtlich des Antriebsrades 2, des Außenrotors 3, der Lagerfläche 4, des Innenrotors 6, der Lagerfläche 7, der Fortsätze 8, des Einlagekörpers 11, des Tragkörpers 12, der Laschen 13 und/oder des Flansches 14 gibt es folgende Gestaltungsmöglichkeiten:
- Die vorgenannten Bauelemente können aus einem beliebigen Kunststoff hergestellt sein oder aus einem Faserverbundwerkstoff. Insbesondere findet ein Thermoplast oder ein Duroplast beliebiger Zusammensetzung Einsatz.
- Weiterhin kann ein beliebiger Verbundwerkstoff vorgesehen werden, beispielsweise ein Kunststoff mit einem Eisenmetall oder einem Nichteisenmetall. Hinsichtlich der thermischen Ausdehnungskoeffizienten können diese gegenseitig aufeinander abgestimmt sein, so dass beispielsweise Kunststoff, Faserverbundwerkstoffe oder Verbundwerkstoffe gleiche thermische Ausdehnungskoeffizienten wie benachbarte Bauelemente aus anderen Materialien aufweisen. Insbesondere besitzen abtriebsseitig angeordnete Bauelemente, also mit der Nockenwelle fest verbundene Bauelemente, einen größeren thermischen Ausdehnungskoeffizienten als antriebsseitig angeordnete Bauelemente.
- Die vorgenannten Bauelemente können zu ein- oder mehrstückig ausgebildeten Einheiten zusammengefasst werden. Beispielsweise ist das Antriebsrad 2, der Außenrotor 3, die Lagerfläche 4 mit Einlagekörper 11, Laschen 13 und Tragkörper 12 sowie Flansch 14 als ein integrales, bauraumoptimiertes Bauelement aus einem oder mehreren Werkstoffen oder Verbundwerkstoffen ausgebildet.
- Zur Gewichtserleichterung und zur Verbesserung der Montagemöglichkeiten können in den vorgenannten Bauelementen Taschen vorgesehen sein.
- Antriebsrad 2 und Einlagekörper 11 können, ggf. unter Zwischenschaltung weiterer (Teil-)Körper kraftschlüssig miteinander verbunden sein, beispielsweise durch Verschrauben, formschlüssig miteinander verbunden sein, beispielsweise durch Nieten, oder stoffschlüssig miteinander verbunden sein, beispielsweise durch Kleben, Aufspritzen oder einstückige Herstellung, wobei auch Kombinationen der vorgenannten Verbindungsmöglichkeiten denkbar sind.
- Nichtkunststoffelemente können als Hilfsmittel zur Verschraubung benutzt werden, beispielsweise auf Grundlage einer "mold-in"- oder "aftermolding"-Technik. Bei einer "mold-in"-Technik handelt es sich beispielsweise um eine Metallbuchse mit Gewinde, die in einer Form umspritzt wird, während als Beispiel für eine "after-mold"-Technik eine Metallbuchse mit Gewinde denkbar ist, die nach dem Spritzvorgang in ein Kunststoffteil eingebracht wird.
- Metallische Elemente oder Teilkörper können als Verstärkungsmaterial in weiteres Material eingebracht werden, beispielsweise zur Homogenisierung der Ausdehnung und/oder zur Verstärkung, zur Bildung von Stützmaterial und zur Erhöhung der Bauteilsteifigkeit.
- Eine Wahl der Materialen und deren Orientierung kann als thermischer Konstruktionsparameter verwendet werden, bei dem je nach Element und dessen Volumenanteil der Ausdehnungskoeffizient auf eine gewünschte Zielgröße eingestellt wird.
- Die Verwendung von Verstärkungseinsätzen oder Inserts kann insbesondere dazu dienen, Setzkraftverluste zu minimieren und direkte Verschraubungen zuzulassen.
- Gemäß Figur 1 kann der Außenrotor unmittelbar in ein Kunststoffmaterial eingebettet werden. Eine Vereinigung dieses Kunststoffmaterials mit dem Außenrotor kann direkt beispielsweise in einem Spritzprozess erfolgen oder aber mittels einer späteren Montage.

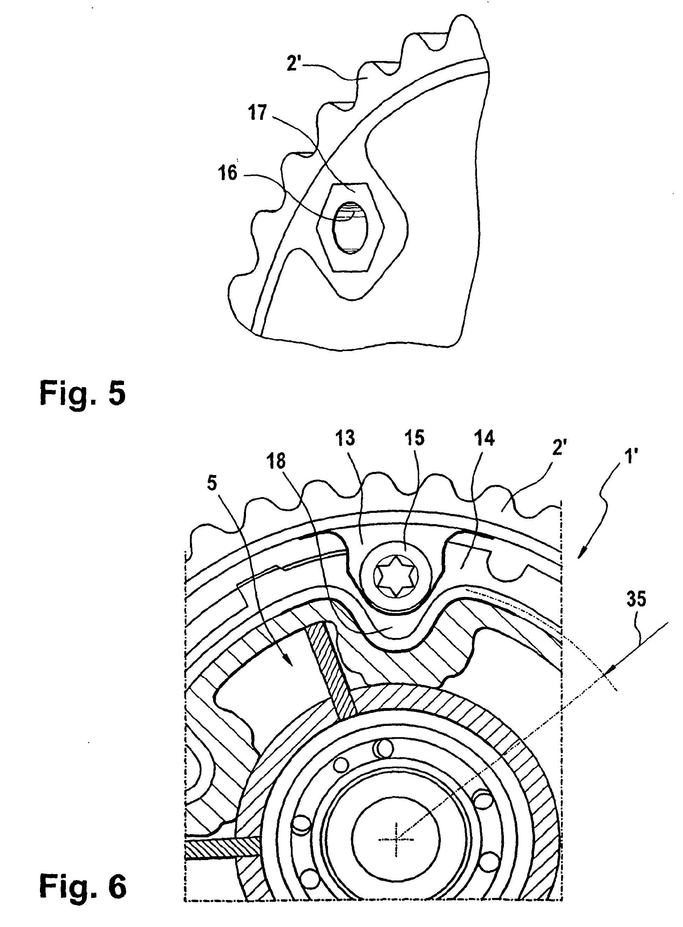

Figur 6 zeigt einen dem Ausführungsbeispiel gemäß Figur 2 zugeordneten Teilquerschnitt. Hierbei ist die Mantelfläche des Außenrotors 3 mit den Druckräumen 5 hin- und hergehend oder mäanderförmig ausgebildet mit unterschiedlichen Radien, wobei im Bereich der Druckräume 5 der Außenradius maximal ist und im Umfangsbereich zwischen benachbarten Druckräumen 5 der Radius verringert ist durch radiale Einbuchtungen oder Vertiefungen 18. Die Laschen 13, die fest oder stoffschlüssig mit dem Zahnkranz 19 verbunden sind, ragen in die Vertiefungen 18 hinein und sind im Bereich der Vertiefungen 18 mit dem Außenrotor 3 verbunden. Hierdurch können die Befestigungselemente 15 zu kleinen Radien "heruntergezogen" werden, so dass die Befestigungselemente 15 bei einem Radius wirken, der im Bereich des Außendurchmessers 35 der Druckräume 5 liegt oder kleiner ist als dieser. Hierbei sind die Befestigungselemente 15, die Laschen 13, ein etwaiger Flansch 14 und die Vertiefungen 18 vorzugsweise axial zwischen Stirnflächen 33, 34 des Antriebsrades 2 bzw. entsprechenden Stirnflächen der Druckräume 5 vorgesehen, so dass sich auch eine kleine axiale Baugröße ergibt.

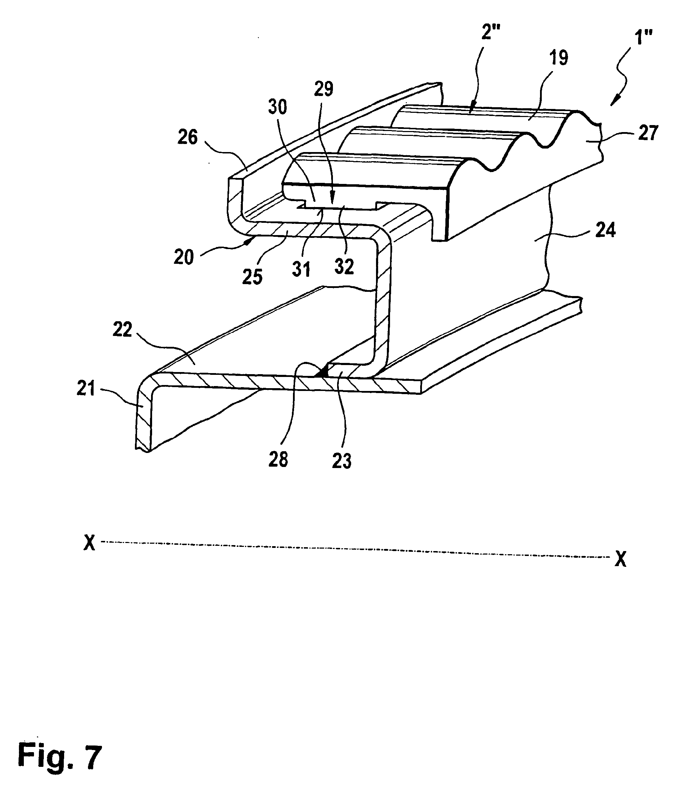

Figur 7 zeigt eine beispielhafte Ausgestaltung für ein Antriebsrad 2" mit zugeordneten Bauelementen, hier ein Zahnkranz 19, ein Tragelement 20 und ein Gehäuse 21.

Das Gehäuse 21 ist insbesondere als Blechteil ausgebildet mit einer ungefähr zylinderförmigen Mantelfläche 22 und beinhaltet weitere Bauelemente des Nockenwellenverstellers 1 ". An der Mantelfläche 22 stützt sich das Tragelement 20 fest ab, insbesondere durch eine stoffschlüssige Anbindung. Hierzu besitzt das Tragelement 20 einen hohlzylinderförmigen Anlagesteg 23, der radial innenliegend an der Mantelfläche 22 anliegt und an mindestens einer axialen Stirnfläche mit dem Gehäuse 21 stoffschlüssig verbunden ist. Der Anlagesteg 23 geht, insbesondere unter Zwischenschaltung eines Übergangsradius, über in einen kreisringscheibenförmigen Tragkörper 24, der koaxial zur Längsachse X-X orientiert ist und wiederum übergeht in einen hohlzylinderförmigen Außenkörper 25 mit einem umlaufenden Absatz 26 oder Bund in den dem Tragkörper 24 gegenüberliegenden Endbereich.

Der Zahnkranz 19 liegt im Bereich einer axialen Stirnfläche an dem Absatz 26 an, während die gegenüberliegende Stirnseite des Zahnkranzes 19 einen radial nach innen ragenden radialen Ansatz 27 aufweist, der an dem Tragkörper 24 bzw. dem Übergangsbereich zwischen Tragkörper 24 und Außenkörper 25 anliegt. Radial innen liegend, insbesondere ungefähr mittig, besitzt der Zahnkranz 19 einen umlaufenden Vorsprung oder über Teilumfänge vorgesehenen Verbindungsbereich 29, der sich ungefähr über die halbe Breite des Zahnkranzes 19 erstreckt. Der Verbindungsbereich 29 ist mit der äußeren Mantelfläche des Außenkörpers 25 stoffschlüssig verbunden.

Für den Zahnkranz 19, das Tragelement 20 und das Gehäuse 21 können sämtliche zuvor erwähnten Materialien oder Materialkombinationen eingesetzt werden. Als eine beispielhafte Ausführungsform ist eine Herstellung des Zahnkranzes 19 aus Kunststoff, insbesondere einem Duroplast, denkbar, während das Tragelement 20 und das Gehäuse 21 aus einem Metall hergestellt sind.

Der Absatz 26 kann alternativ oder zusätzlich zu der Montageerleichterung einer Führung eines Antriebselementes wie eines Zahnriemens oder einer Steuerkette in Richtung der Längsachse X-X dienen.

Der Außenkörper 25 besitzt auf seiner äußeren Mantelfläche vorzugsweise Vertiefungen 31 oder Aussparungen oder Nuten, die als Taschen in dem Außenkörper oder durchgehend durch diesen ausgebildet sein können. Für das dargestellte Ausführungsbeispiel sind die Vertiefungen 31 mit ungefähr rechteckigem Querschnitt ausgebildet. Von dem Zahnkranz 19, insbesondere von dem Vorsprung 30, treten radial nach innen orientierte Vorsprünge 32 oder ein umlaufender Bund radial nach innen hervor, die zumindest in Längsrichtung X-X und/oder in Umfangsrichtung formschlüssig in der Vertiefung 31, Aussparung oder der Nut aufgenommen sind. In radialer Richtung kann der Zahnkranz 19 gegenüber dem Tragelement 20 durch den Vorsprung 30 und/oder Vorsprung 32 geführt sein.

### Bezugszeichenliste

- 1: Nockenwellenversteller
- 2: Antriebsrad
- 3: Außenrotor
- 4: Lagerfläche Außenrotor
- 5: Druckkammer
- 6: Innenrotor
- 7: Lagerfläche Innenrotor
- 8: Fortsätze
- 9: Druckraum
- 10: Druckraum
- 11: Einlagekörper
- 12: Tragkörper
- 13: Laschen
- 14: Flansch
- 15: Befestigungselement
- 16: Bohrung
- 17: Verstärkungseinsatz
- 18: Vertiefung
- 19: Zahnkranz
- 20: Tragelement
- 21: Gehäuse
- 22: Mantelfläche
- 23: Anlagesteg
- 24: Tragkörper
- 25: Außenkörper
- 26: Absatz
- 27: Ansatz
- 28: erster Verbindungsbereich
- 29: zweiter Verbindungsbereich
- 30: Vorsprung
- 31: Vertiefung
- 32: Vorsprung
- 33: axiale Stirnfläche
- 34: axiale Stirnfläche
- 35: Außenradius Druckkammer

## Patentansprüche

1. Nockenwellenversteller (1), bei dem die relative Winkelbeziehung zwischen einem Antriebsrad (2) und einem einer Nockenwelle zugeordneten Abtriebselement über eine hydraulische Beaufschlagung von Druckräumen (9, 10) zwischen einem Außenrotor (3) und einem Innenrotor (6) verstellbar ist, wobei der Außenrotor (3) und ein Zahnkranz (19) des Antriebsrades (2) über Befestigungselemente (15) miteinander verbunden sind, die Befestigungselemente (15) zumindest teilweise bei einem Abstand von einer Längsachse (X-X) des Nockenwellenverstellers (1) angeordnet sind, der kleiner ist als der Außenradius (35) der Druckräume (9, 10), die Befestigungselemente (15) in Richtung der Längsachse (X-X) des Nockenwellenversteller (1) zumindest teilweise zwischen axialen Stirnflächen (33, 34) der Druckräume (9,10) oder des Antriebsrades (2) angeordnet sind, der Außenrotor (3) zwischen benachbarten Druckräumen (9, 10) radiale Einbuchtungen oder Vertiefungen (18) aufweist, **dadurch gekennzeichnet, dass** in diese radialen Einbuchtungen oder Vertiefungen radial nach innen orientierte, fest mit dem Zahnkranz (19) des Antriebsrades (2) verbundene Laschen (13) hineinragen, die über die Befestigungselemente (15) im Bereich der Vertiefungen (18)'mit dem Außenrotor (6) verbunden sind.

2. Nockenwellenversteller (1) nach Anspruch 1, **dadurch gekennzeichnet, dass** die Befestigungselemente (15) in Umfangsrichtung zwischen Druckräumen (9, 10) angeordnet sind.

3. Nockenwellenversteller (1) nach einem der vorhergehenden Ansprüche **dadurch gekennzeichnet, dass**
- das Antriebsrad (2) aus Kunststoff hergestellt ist,
- der dem Antriebsrad (2) zugeordnete Außenrotor (3) aus Metall hergestellt ist und
- zumindest eine Lagerfläche (4) des Außenrotors (3) mit einem metallischen Einlagekörper (11) gebildet ist, der stoffschlüssig oder formschlüssig in einem Tragkörper (12) aus Kunststoff aufgenommen ist.

4. Nockenwellenversteller (1) nach Anspruch 3, **dadurch gekennzeichnet, dass** der Einlagekörper (11) in Umfangsrichtung umlaufend ausgebildet ist und zusätzlich zu der Lagerfläche (4) eine Begrenzung der Druckräume (9, 10) bildet.

5. Nockenwellenversteller (1) nach einem der vorhergehenden Ansprüche, **dadurch gekennzeichnet, dass** das Antriebsrad (2) aus einem Verbundwerkstoff hergestellt ist.

6. Nockenwellenversteller (1) nach einem der vorhergehenden Ansprüche, **dadurch gekennzeichnet, dass** der Innenrotor (3) mit Kunststoff gebildet ist und eine form- oder stoffschlüssig mit dem Innenrotor (3) verbundene Lagerfläche (4) aus Metall aufweist.

7. Nockenwellenversteller (1) nach einem der vorhergehenden Ansprüche, **dadurch gekennzeichnet, dass** das Antriebsrad (2) mit einem Zahnkranz (19), Riemenrad und/oder Kettenrad aus Kunststoff gebildet ist.

8. Nockenwellenversteller (1) nach Anspruch 4, **dadurch gekennzeichnet, dass** die Befestigungselemente (15) mit Verstärkungseinsätzen (17) des Zahnkranzes (19) und/oder des Flansches (14) zusammenwirken.

9. Nockenwellenversteller (1) nach einem der Ansprüche 3, 4 oder 8, **dadurch gekennzeichnet, dass** der Einlagekörper (11) und der Tragkörper (12) über einen Spritzprozess stoffschlüssig miteinander verbunden sind.

10. Nockenwellenversteller (1) nach einem der vorhergehenden Ansprüche, **dadurch gekennzeichnet, dass**
- der Zahnkranz (19) mit den Laschen (13) einstückig ausgebildet,
- der Zahnkranz (19) mit den Laschen (13) mit einem Verbundwerkstoff ausgebildet und
- verstärkendes Material des Verbundwerkstoffes im Bereich der Laschen (13) angeordnet
ist.

## Claims

1. Camshaft adjuster (1) in which the relative angle relationship between a drive input wheel (2) and a drive output element, which is assigned to a camshaft, can be adjusted by means of a hydraulic pressurization of pressure chambers (9, 10) between an outer rotor (3) and an inner rotor (6), wherein the outer rotor (3) and a toothed ring (19) of the drive input wheel (2) are connected to one another by means of fastening elements (15), the fastening elements (15) are arranged at least partially at a distance, which is smaller than the outer radius (35) of the pressure chambers (9, 10), from a longitudinal axis (X-X) of the camshaft adjuster (1), the fastening elements (15) are arranged at least partially between axial end surfaces (33, 34) of the pressure chambers (9, 10) or of the drive input wheel (2) in the direction of the longitudinal axis (X-X) of the camshaft adjuster (1), and the outer rotor (3) has radial indentations or depressions (18) between adjacent pressure chambers (9, 10), **characterized in that** radially inwardly oriented lugs (13) which are fixedly connected to the toothed ring (19) of the drive input wheel (2) project into said radial indentations or depressions, which lugs are connected in the region of the depressions (18) to the outer rotor (3) by means of the fastening elements (15).

2. Camshaft adjuster (1) according to Claim 1, **characterized in that** the fastening elements (15) are arranged between pressure chambers (9, 10) in the circumferential direction.

3. Camshaft adjuster (1) according to one of the preceding claims, **characterized in that**
- the drive input wheel (2) is produced from plastic,
- the outer rotor (3), which is assigned to the drive input wheel (2), is produced from metal, and
- at least one bearing surface (4) of the outer rotor (3) is formed with a metallic inlay body (11) which is held in a cohesive or positively locking manner in a support body (12) composed of plastic.

4. Camshaft adjuster (1) according to Claim 3, **characterized in that** the inlay body (11) is of encircling form in the circumferential direction and forms a delimitation of the pressure chambers (9, 10) in addition to the bearing surface (4).

5. Camshaft adjuster (1) according to one of the preceding claims, **characterized in that** the drive input wheel (2) is produced from a composite material.

6. Camshaft adjuster (1) according to one of the preceding claims, **characterized in that** the inner rotor (6) is formed with plastic and has a bearing surface (4) which is composed of metal and which is connected in a positively locking or cohesive manner to the inner rotor (6).

7. Camshaft adjuster (1) according to one of the preceding claims, **characterized in that** the drive input wheel (2) is formed with a toothed ring (19), belt pulley and/or sprocket composed of plastic.

8. Camshaft adjuster (1) according to Claim 4, **characterized in that** the fastening elements (15) interact with reinforcement inserts (17) of the toothed ring (19) and/or of the flange (14).

9. Camshaft adjuster (1) according to one of Claims 3, 4 or 8, **characterized in that** the inlay body (11) and the support body (12) are cohesively connected to one another by means of an injection moulding process.

10. Camshaft adjuster (1) according to one of the preceding claims, **characterized in that**
- the toothed ring (19) is formed in one piece with the lugs (13),
- the toothed ring (19) with the lugs (13) is formed with a composite material, and
- reinforcing material of the composite material is arranged in the region of the lugs (13).

## Revendications

1. Dispositif de réglage d'arbre à cames (1), dans lequel la relation angulaire relative entre une roue d'entraînement (2) et un élément de sortie associé à un arbre à cames peut être réglée par le biais d'une sollicitation hydraulique de chambres de pression (9, 10) entre un rotor extérieur (3) et un rotor intérieur (6), le rotor extérieur (3) et une couronne dentée (19) de la roue d'entraînement (2) étant connectés l'un à l'autre par le biais d'éléments de fixation (15), les éléments de fixation (15) étant disposés au moins en partie à une distance d'un axe longitudinal (X-X) du dispositif de réglage d'arbre à cames (1) qui est inférieure au rayon extérieur (35) des chambres de pression (9, 10), les éléments de fixation (15) étant disposés dans la direction de l'axe longitudinal (X-X) du dispositif de réglage d'arbre à cames (1) au moins en partie entre des surfaces frontales (33, 34) des chambres de pression (9, 10) ou de la roue d'entraînement (2), le rotor extérieur (3) présentant, entre des chambres de pression adjacentes (9, 10) des retraits ou des renfoncements radiaux (18), **caractérisé en ce que** dans ces retraits ou renfoncements radiaux pénètrent des pattes (13) orientées radialement vers l'intérieur, connectées fixement à la couronne dentée (19) de la roue d'entraînement (2), qui sont connectées par le biais des éléments de fixation (15) dans la région des renfoncements (18) au rotor extérieur (3).

2. Dispositif de réglage d'arbre à cames (1) selon la revendication 1, **caractérisé en ce que** les éléments de fixation (15) sont disposés dans la direction périphérique entre des chambres de pression (9, 10).

3. Dispositif de réglage d'arbre à cames (1) selon l'une quelconque des revendications précédentes, **caractérisé en ce que**
- la roue d'entraînement (2) est fabriquée en plastique,
- le rotor extérieur (3) associé à la roue d'entraînement (2) est fabriqué en métal et
- au moins une surface de palier (4) du rotor extérieur (3) est formée avec un corps d'insertion métallique (11) qui est reçu par engagement par liaison de matière ou par engagement par coopération de forme dans un corps porteur (12) en plastique.

4. Dispositif de réglage d'arbre à cames (1) selon la revendication 3, **caractérisé en ce que** le corps d'insertion (11) est réalisé sous forme circonférentielle dans la direction périphérique et forme en plus de la surface de palier (4) une limitation des chambres de pression (9, 10).

5. Dispositif de réglage d'arbre à cames (1) selon l'une quelconque des revendications précédentes, **caractérisé en ce que** la roue d'entraînement (2) est fabriquée en un matériau composite.

6. Dispositif de réglage d'arbre à cames (1) selon l'une quelconque des revendications précédentes, **caractérisé en ce que** le rotor intérieur (6) est formé en plastique et présente une surface de palier (4) en métal connectée par engagement par coopération de forme ou par liaison de matière au rotor intérieur (6).

7. Dispositif de réglage d'arbre à cames (1) selon l'une quelconque des revendications précédentes, **caractérisé en ce que** la roue d'entraînement (2) est formée avec une couronne dentée (19), une roue à courroie et/ou une roue à chaîne en plastique.

8. Dispositif de réglage d'arbre à cames (1) selon la revendication 4, **caractérisé en ce que** les éléments de fixation (15) coopèrent avec des inserts de renfort (17) de la couronne dentée (19) et/ou de la bride (14).

9. Dispositif de réglage d'arbre à cames (1) selon l'une quelconque des revendications 3, 4 ou 8, **caractérisé en ce que** le corps d'insertion (11) et le corps porteur (12) sont connectés l'un à l'autre par engagement par liaison de matière par le biais d'un procédé de pulvérisation.

10. Dispositif de réglage d'arbre à cames (1) selon l'une quelconque des revendications précédentes, **caractérisé en ce que.**
- la couronne dentée (19) est réalisée d'une seule pièce avec les pattes (13),
- la couronne dentée (19) est réalisée avec les pattes (13) en un matériau composite et
- un matériau de renforcement du matériau composite est disposé dans la région des pattes (13).
